# FASCICULE DE BREVET EUROPEEN

(11) **EP 3 856 589 B1**
(45) Date de publication et mention de la délivrance du brevet: **25.10.2023**
(21) Numéro de dépôt: 19786370.7
(22) Date de dépôt: 04.09.2019
(51) Int. Cl.: B60T 8/175, B60K 28/16

(54) **PROCEDE DE GESTION DU GROUPE MOTO-PROPULSEUR D'UN VEHICULE AUTOMOBILE**
VERFAHREN ZUR VERWALTUNG DES ANTRIEBSSTRANGS EINES KRAFTFAHRZEUGS
METHOD FOR MANAGING THE DRIVE TRAIN OF A MOTOR VEHICLE

(30) Priorité: 25.09.2018 FR 1858721
(43) Date de publication de la demande: 04.08.2021
(73) Titulaire: PSA Automobiles SA, 78300 Poissy (FR)
(72) Inventeur: MICHAUT, Simon, 95870 BEZONS (FR); BLANCHET, Alexandre, 78124 MONTAINVILLE (FR); ROCQ, Gaetan, 78125 LA BOISSIERE ECOLE (FR)
(86) Numéro de dépôt international: PCT/FR2019/052038
(87) Numéro de publication internationale: WO 2020/065158

(56) Documents cités:
- EP-A1- 2 711 526
- DE-A1-102017 202 291
- US-A1- 2013 151 053
- US-A1- 2015 375 745

## Description

L'invention s'inscrit dans le domaine de la commande du groupe motopropulseur des véhicules automobiles, en particulier au moment de la mise en mouvement (décollage), le véhicule étant à l'arrêt.

Elle s'applique à des véhicules divers, équipés d'un moteur thermique ou électrique, ou encore plus particulièrement d'une motorisation hybride thermique et électrique, notamment dans le cadre d'un véhicule hybride rechargeable (PHEV : Plug-in Hybrid Electric Vehicle). L'invention s'applique aussi que la boîte de vitesses du véhicule, si le véhicule est muni d'une telle boîte, soit manuelle ou automatique, et à rapports discrets ou continus.

Il est connu de munir les véhicules automobiles d'une fonction anti-patinage, qui est incluse dans un module de correcteur électronique de trajectoire (ESP pour Electronic Stability Program) et détecte les situations de perte ou à risque de perte d'adhérence des roues vis-à-vis du sol, en fonction notamment de la vitesse de rotation des roues et de la vitesse horizontale du véhicule, ainsi que de l'angle du volant, de l'accélération latérale et de l'angle de lacet.

On connaît aussi du document EP0321893_A1 une méthode de contrôle du glissement des roues par freinage des roues, à l'aide des freins hydrauliques du véhicule, quand elles glissent, le taux de glissement à partir duquel le freinage est activé étant réglable par le choix d'un mode parmi plusieurs modes prédéfinis.

Avec un ESP, la fonction anti-patinage diminue la consigne d'accélération provenant du conducteur et émise par un système de contrôle prenant en compte l'état d'enfoncement de la pédale d'accélération, à destination du groupe motopropulseur sous la forme d'une commande de couple, afin de garder les roues en contact avec le sol. Il peut en résulter des à-coups, car le correcteur électronique retire et redonne du couple par saccades.

L'invention s'intéresse en particulier à la situation dans laquelle le glissement des roues est causé ou est en passe d'être causé par l'appui du conducteur simultanément sur la pédale d'accélérateur et la pédale de frein (double appui), le véhicule étant à l'arrêt (départ arrêté). Ainsi, lors du relâché de la commande de frein, la limite d'adhérence des pneus peut être dépassée. En cette circonstance, le véhicule reste à l'arrêt ou progresse peu, prenant lentement de la vitesse, car la fonction d'antipatinage du correcteur électronique coupe en tout ou plus généralement en partie, par saccades, la commande de couple adressée au groupe moto-propulseur. Il en résulte, outre que le véhicule avance lentement voire peu, un ressenti négatif pour le conducteur. L'invention vise à résoudre ce problème.

Le document US2015/375745 A1 décrit un correcteur électronique qui coupe la commande de couple lors que le conducteur actionne simultanément la pédale de frein et l'accélérateur.

Pour cela, il est proposé un procédé de gestion du groupe moto-propulseur de véhicule automobile en réponse à un appui sur une commande d'accélérateur par un conducteur du véhicule à l'arrêt, le procédé comprenant une étape de calcul d'une valeur de couple de référence traduisant l'appui sur la commande d'accélérateur et une étape de transmission d'une consigne au groupe moto-propulseur en fonction de ladite valeur de couple de référence.

Le procédé comprend de plus avant l'étape de transmission, si un appui est effectué sur une commande de frein par le conducteur, une étape de mise en oeuvre d'une limitation de la valeur de couple de référence à une valeur inférieure constituant la consigne.

Ainsi, on prévient le patinage des roues motrices, en évitant que le groupe moto-propulseur tente de transmettre trop de couple aux roues alors que les freins bloquent la rotation de celles-ci, pour éviter le patinage au moment du lâcher des freins. L'agrément de conduite est amélioré car on évite les à-coups générés par l'intervention de l'ESP qui se produirait si les roues patinaient, du fait d'une tentative de décollage pleine charge du conducteur effectuant un double appui véhicule à l'arrêt. On répond alors au souhait du conducteur de suivre un départ optimal, à la fois en matière d'agrément et de performance.

Des caractéristiques supplémentaires de l'invention sont les suivantes :
- le procédé comprend de plus, si la commande de frein est relâchée, une étape de diminution de ladite limitation ;
- l'étape de diminution de la limitation est mise en oeuvre par application d'une rampe de reprise en fonction du temps.

Des caractéristiques avantageuses et optionnelles sont les suivantes:
- la diminution de la limitation est effectuée en fonction de la vitesse du véhicule ;
- le véhicule étant initialement à l'arrêt et la consigne de couple de référence étant constante, la limitation est faite à une valeur constante de couple ;
- la limitation est effectuée à une valeur de couple qui évite un déclenchement d'une fonction de réduction du patinage des roues motrices mais qui suffit à préparer une chaîne de traction du groupe moto-propulseur à fournir un couple auxdites roues motrices ;
- le véhicule étant initialement à l'arrêt, et les appuis étant des appuis au maximum sur les commandes d'accélérateur et de frein, la limitation est effectuée entre 40 et 60% de la consigne de couple de référence ;
- l'étape de calcul de la consigne de couple est effectuée en fonction d'un mode de fonctionnement du groupe moto-propulseur choisi par le conducteur entre plusieurs modes prédéfinis, et d'une position de la commande d'accélérateur.

L'invention propose aussi un dispositif de gestion du groupe moto-propulseur de véhicule automobile en réponse à un appui sur une commande d'accélérateur par un conducteur du véhicule à l'arrêt, selon la revendication indépendante 6, le dispositif comprenant des moyens de calcul d'une valeur de couple de référence traduisant l'appui sur la commande d'accélérateur et des moyens de transmission d'une consigne au groupe moto-propulseur en fonction de ladite valeur de couple de référence.

Le dispositif comprend des moyens de mise en oeuvre avant la transmission, si un appui est effectué sur une commande de frein par le conducteur, d'une limitation de la valeur de couple de référence à une valeur inférieure constituant la consigne.

Et enfin, l'invention propose un véhicule automobile comprenant un correcteur électronique de trajectoire et un dispositif de gestion du groupe moto-propulseur selon les principes évoqués, ledit dispositif étant configuré pour limiter le couple transmis aux roues lors d'un départ arrêté.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :
- La figure 1 est un schéma d'un véhicule dans lequel est mis en oeuvre l'invention ;
- la figure 2 est un scénario d'utilisation d'un tel véhicule avec une gestion selon l'art antérieur ;
- la figure 3 est une vue d'un mode de réalisation de l'invention ;
- la figure 4 est un scénario d'utilisation d'un véhicule selon la figure 1 avec une gestion selon l'invention.

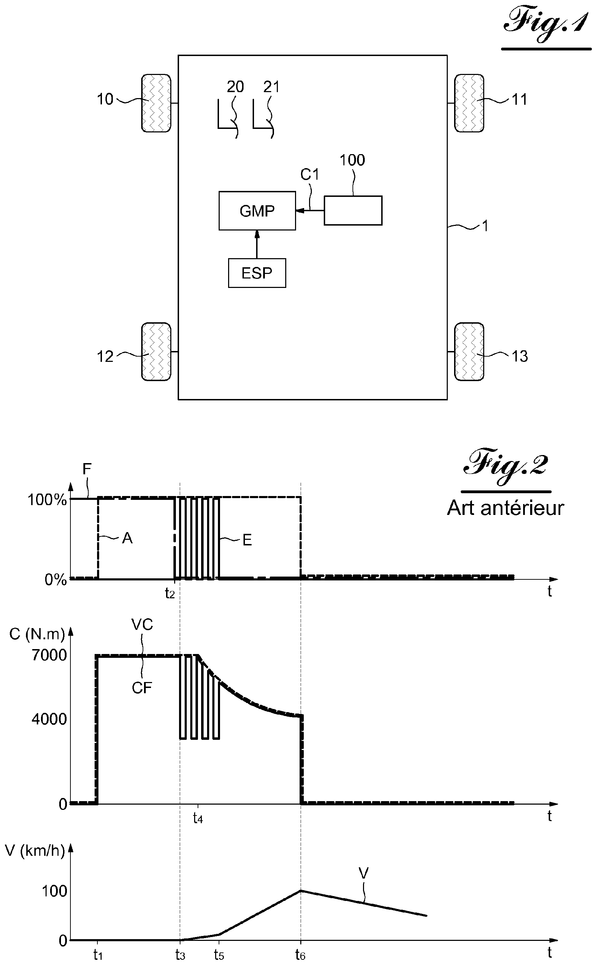

En figure 1, on visualise un véhicule automobile 1, qui comporte quatre roues 10 à 13 et un groupe moto-propulseur GMP qui peut être thermique, électrique ou hybride, et qui entraine au moins deux roues motrices parmi les 4 roues 10 à 13, par l'intermédiaire d'éléments de couplage formant une chaîne de traction avant ou arrière ou deux chaînes de traction, avant et arrière.

Dans le mode de réalisation représenté, le véhicule dispose de deux chaînes de traction, l'une à l'avant et l'autre à l'arrière. Il s'agit d'un véhicule à motorisation hybride thermique et électrique à 4 roues motrices, avec un moteur thermique et un moteur électrique constituant une chaîne de traction avant, et un moteur électrique définissant une chaîne de traction arrière.

Le conducteur du véhicule 1 a accès à des commandes d'accélérateur 20 et de frein 21, sous la forme de pédales.

Le groupe moto-propulseur GMP reçoit une commande de couple C1 d'un contrôleur 100, qui a reçu l'information d'état d'enfoncement courant de la pédale d'accélérateur 20, suite à l'appui sur celle-ci par le conducteur. Le contrôleur 100 assure une gestion du groupe moto-propulseur 100.

La commande de couple C1 reçue par le GMP du contrôleur 100 traduit la volonté du conducteur telle qu'exprimée par l'enfoncement de la pédale d'accélérateur 20, et en fonction éventuellement d'un mode de fonctionnement du GMP sélectionné par le conducteur parmi différents modes prédéfinis, au début de la phase de conduite concernée. L'identification du mode a été fournie au contrôleur 100, suite à l'appui du conducteur sur un bouton ou un élément de menu accessible dans l'IHM (interface homme-machine) du poste conducteur. Le contrôleur 100 reçoit aussi l'information de vitesse horizontale courante du véhicule.

Le contrôleur 100 utilise une cartographie de la pédale d'accélérateur et définit en fonction de l'état d'enfoncement de cette pédale, de la vitesse horizontale du véhicule, et du mode de fonctionnement du GMP, le couple à fournir aux roues motrices, traduisant la volonté du conducteur et définissant la commande C1.

La cartographie de la pédale d'accélérateur permet d'exploiter le potentiel de couple du groupe moto-propulseur en fonction de la vitesse horizontale. Le couple fourni varie peu en fonction de la vitesse horizontale si elle est faible, et la puissance fournie varie peu en fonction de la vitesse horizontale si la vitesse horizontale est élevée.

Le calcul et la transmission de cette consigne de couple est faite, dans l'art antérieur, sans tenir compte des conditions d'adhérence de la route. Ainsi il s'agit d'une valeur de couple de référence traduisant l'appui sur la commande d'accélérateur et non modifiée pour tenir compte des conditions d'adhérence. La transmission de la consigne de couple est ainsi faite en fonction de la valeur de référence C0, qui est utilisée sans modification.

La valeur maximale de couple pouvant être demandée au GMP, pour les situations de faible vitesse horizontale qui sont celles concernées par la présente description, est égale à l'addition des couples maximums que peuvent fournir les moteurs thermique et électriques du GMP.

Un superviseur de contrôle électronique de trajectoire ESP est présent dans le véhicule, reçoit des informations de chaque roue, notamment sa vitesse individuelle de rotation, qui est appréciée au vu de la vitesse horizontale du véhicule, et recherche si une situation de patinage d'une ou plusieurs roues est détectée.

Si une telle situation de patinage est détectée, le superviseur ESP adresse une commande de bridage de la commande de couple au groupe moto-propulseur, qui limite le couple qu'il doit fournir aux roues motrices, à une valeur inférieure à celle traduisant la volonté du conducteur transmise par le contrôleur 100.

En référence à la figure 2, on a représenté un scénario de fonctionnement du véhicule 1 utilisant une gestion du GMP selon l'art antérieur.

Initialement, les freins F sont serrés, et l'accélérateur A relâché. Le véhicule 1 étant à l'arrêt, le conducteur appuie alors simultanément sur la pédale d'accélérateur 20 et la pédale de frein 21, au maximum pour les deux (100%). Cela est représenté dans la partie supérieure de la figure 2 à partir de l'instant t1.

Comme on peut l'observer sur la partie intermédiaire de la figure 2, le contrôleur 100 définit par calcul une valeur de couple de référence reflétant la volonté du conducteur VC, ici de 7000 N.m à partir de l'instant t1, alors qu'auparavant cette valeur VC étant de 0 N.m. Dans la gestion selon l'art antérieur cette valeur de couple de référence fait l'objet, sans modification, d'une transmission au GMP comme consigne de couple à appliquer aux roues motrices.

Et le groupe motopropulseur ne recevant aucune consigne contraire du superviseur ESP, il applique une consigne finale CF égale au couple reflétant la volonté du conducteur VC.

Néanmoins, bien que le moteur ainsi s'engage dans la transmission de couple vers les roues motrices, le véhicule reste immobilisé du fait de l'action des freins. La vitesse horizontale, représentée en partie basse de la figure, reste à la valeur de 0 km/h après l'instant t1, comme avant.

À partir d'un instant t2, les freins sont subitement et entièrement relâchés par le conducteur, comme cela est figuré par le retour de la courbe F à 0% dans la partie supérieure de la courbe. À partir de cet instant t2, le véhicule commence à entrer en mouvement, comme cela est visible dans la partie basse, sur laquelle la vitesse horizontale commence à augmenter, en partant de la valeur nulle.

A partir d'un instant t3 suivant rapidement l'instant t2, si bien que le véhicule est à l'instant t3 encore presque à l'arrêt, le superviseur ESP, constatant la situation de patinage des roues motrices, engage une séquence de limitations successives de la valeur de consigne de couple à une valeur proche de 4000 N.m, chaque limitation étant interrompue rapidement de telle sorte que la consigne de couple ne soit plus limitée ensuite pendant une durée proche de la durée de la limitation interrompue. Ainsi la consigne finale CF entame une série de créneaux entre les valeurs de 4000 et 7000 N.m. Cela correspond à une activation de l'ESP sous forme de créneaux de valeurs minimale 0% et maximale 100%, comme cela est visible sur la courbe E représentant l'activation de l'ESP, en pourcentage, en partie haute de la figure.

Le véhicule gagne en vitesse horizontale, comme cela apparaît sur la courbe V. Mais il est secoué par des à-coups liés aux créneaux produits par le superviseur ESP. Ceux-ci ont un impact en matière d'agrément. Le conducteur les ressent négativement.

A partir de l'instant t4, le véhicule gagnant en vitesse horizontale, le couple définissant la volonté du conducteur VC diminue et le haut des créneaux de la consigne finale CF diminue en conséquence. Les créneaux persistent, et le conducteur ressent toujours négativement le comportement du moteur et du véhicule.

À partir d'un instant t5, le superviseur ESP détermine que les conditions de patinage ne sont plus présentes, et les limitations successives de la consigne de couple sont interrompues. Il en résulte que la consigne finale CF redevient égale à tout instant à la valeur de couple traduisant la volonté du conducteur VC.

Le véhicule gagne en vitesse, mais avec une accélération plus élevée qu'avant t5, du fait de la disparition des limitations intermittentes de couple.

À partir d'un instant t6, le conducteur cesse d'appuyer sur la pédale d'accélérateur, la consigne de couple redevient nulle et le véhicule ralentit.

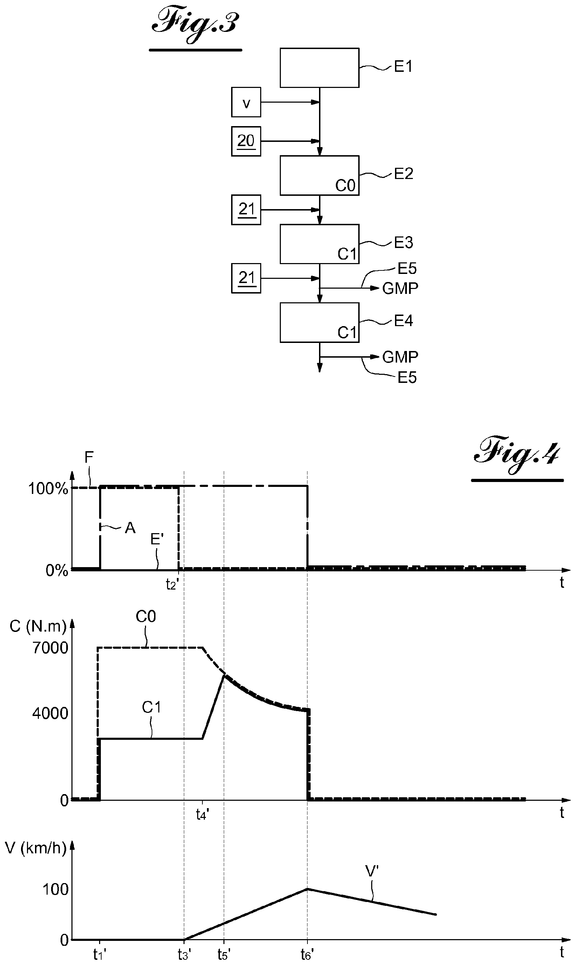

En figure 3, on a représenté un procédé de gestion suivant l'invention, dans le contrôleur 100.

En étape E1, le contrôleur 100, après avoir été informé du choix du mode de fonctionnement du GMP souhaité par le conducteur pour la phase de conduite concernée, choisit le mode de calcul du couple à demander au GMP pour traduire la volonté du conducteur exprimée par un appui sur la pédale d'accélérateur.

Puis, le contrôleur 100 reçoit l'information d'appui sur la pédale d'accélérateur 20, sous la forme de la position d'enfoncement de la pédale (de 0 à 100%). Il reçoit cette information courante de manière continue à partir de cette phase de procédé.

En étape E2, le contrôleur 100 calcule une valeur de couple de référence, ou commande de couple C0 à envoyer sous conditions au GMP, en fonction de l'information d'appui sur la pédale d'accélérateur 20 et du mode de fonctionnement sélectionné, c'est-à-dire à l'aide du mode de calcul sélectionné en étape E1. Il prend également en compte la vitesse horizontale courante v du véhicule, qui dans le scénario considéré est nulle. Il ne prend par contre pas en compte les conditions d'adhérence de la route.

Puis, le contrôleur 100 reçoit l'information d'appui sur la pédale de frein 21, sous la forme de la position d'enfoncement de la pédale (de 0 à 100%). Il reçoit cette information courante de manière continue à partir de cette phase de procédé. Dans le scénario qui est présenté ici, cette valeur est positive voire élevée, voire proche de ou égale à 100%.

En étape E3, le contrôleur 100 prend en compte la position de la pédale de frein 21, et si un appui a été effectué par le conducteur sur la pédale de frein 21, le contrôleur 100 limite la commande de couple C0 en une valeur modifiée C1, positive, inférieure à la valeur de C0.

Puis, au cours d'une étape E5, le contrôleur 100 transmet la valeur modifiée de commande C1 au GMP comme consigne pour que celui-ci l'applique aux organes de ses chaînes de traction puis aux roues. Cette transmission d'une valeur définie à partir de la valeur de couple de référence C0 est ainsi faite en fonction de cette valeur de référence C0.

Cela a pour conséquence que les organes des chaînes de traction sont fermés et prêts à transmettre toute la puissance des moteurs vers les roues. Cela permet de faire monter en couple le moteur thermique, qui a une dynamique de montée en couple qui peut être perçue comme lente.

Du couple est d'ores et déjà appliquée aux roues motrices, mais moins que si la commande de couple C0 était transmise au GMP sans modification comme dans l'art antérieur. Ainsi, du couple est prédisposé aux roues, mais on évite de déclencher la fonction antipatinage de l'ESP.

En effet la limitation de la valeur de couple transmise aux roues permet d'éviter l'activation de la fonction antipatinage de l'ESP.

Le ressenti du conducteur est amélioré.

Puis, dans le scénario présenté le contrôleur 100 reçoit toujours l'information d'appui sur la pédale de frein 21, sous la forme de la position d'enfoncement de la pédale (de 0 à 100%), mais cette valeur diminue, la pédale de frein 21 ayant été, dans notre scénario, relâchée par le conducteur, et elle est maintenant proche de 0%.

En étape E4, le contrôleur 100 prend en compte la position de la pédale de frein 21, et diminue la limitation imposée à la commande de couple C0 qui était modifiée en la valeur C1. Ainsi C1 se rapproche de C0, par une diminution de la limitation, qui peut être progressive. Puis le contrôleur 100 transmet, au cours d'une étape E5, la valeur modifiée de commande C1 au GMP pour que celui-ci l'applique aux roues motrices.

Dans le mode de réalisation envisagé, une rampe de reprise de couple est appliquée de manière à ce que la valeur de C1 redevienne égale à C0 de manière progressive, suivant une évolution linéaire en fonction du temps. Une telle rampe est appliquée si la vitesse est encore faible, pour éviter le patinage. Si la vitesse horizontale est au-dessus d'une certaine limite prédéfinie, la diminution de la limitation est au contraire instantanée, et complète, car il n'y a pas de risque de patinage. Ainsi, la diminution de la limitation est effectuée en fonction de la vitesse horizontale.

Cela permet d'éviter l'activation de la fonction antipatinage de l'ESP. En effet la limitation toujours en cours de la valeur de couple transmise aux roues permet de limiter le patinage et d'éviter l'activation de la fonction antipatinage de l'ESP.

En figure 4 on a représenté le scénario envisagé, qui est basé sur le scénario de la figure 2, avec cette fois-ci le procédé de gestion selon l'invention.

Initialement, les freins F sont serrés, et l'accélérateur A relâché. Mais à partir de l'instant t1', le véhicule 1 étant à l'arrêt, le conducteur appuie, selon le scénario, simultanément sur la pédale d'accélérateur 20 et la pédale de frein 21, au maximum pour les deux (100%).

Le contrôleur 100 définit le couple reflétant la volonté du conducteur C0, de 7000 N.m à partir de l'instant t1'. Il le limite immédiatement à la valeur C1, inférieure, proche de 3500 N.m et transmet cette valeur de commande au GMP comme consigne. La limitation n'est effectuée que si le conducteur a appuyé sur la pédale de frein 21, ce qui est le cas dans le scénario.

On constate dans ce scénario dans lequel le véhicule 1 est initialement à l'arrêt, et les appuis sont des appuis au maximum sur les commandes d'accélérateur 20 et de frein 21, la limitation est effectuée entre 40 et 60% de la consigne de couple de référence C0.

Le véhicule reste immobilisé du fait de l'action des freins. La vitesse horizontale V', reste à la valeur de 0 km/h après l'instant t1', comme avant.

À partir d'un instant t2', les freins sont subitement et entièrement relâchés par le conducteur. A partir d'un instant t3' suivant rapidement l'instant t2', la vitesse V' devient sensiblement positive. Le véhicule gagne en vitesse. Depuis t2', l'ESP reste inactif, comme montre sa courbe d'activation (en %), qui reste à la valeur 0%

À partir de l'instant t4', le véhicule gagnant en vitesse, le couple définissant la volonté du conducteur C0 diminue. Aux alentours de cet instant t4', en même temps ou un peu avant ou un peu après, en tout cas après t2', le contrôleur 100 entame une diminution de la limitation de la valeur de couple, et C1 commence à se rapprocher de C0, en suivant une rampe en fonction du temps.

À partir d'un instant t5', la valeur de C1 rejoint la valeur de C0. Il en résulte que la consigne finale redevient égale à tout instant à la valeur de couple traduisant la volonté du conducteur C0. Le véhicule continue à gagner en vitesse.

À partir d'un instant t6', le conducteur cesse d'appuyer sur la pédale d'accélérateur, la consigne de couple redevient nulle et le véhicule ralentit.

## Revendications

1. Procédé de gestion d'un groupe moto-propulseur (GMP) de véhicule automobile (1) en réponse à un appui sur une commande d'accélérateur (20) par un conducteur du véhicule à l'arrêt, le procédé comprenant une étape de calcul (E2) d'une valeur de couple de référence (C0) traduisant l'appui sur la commande d'accélérateur (20) et une étape de transmission (E5) d'une consigne (C1) au groupe moto-propulseur (GMP) en fonction de ladite valeur de couple de référence (C0), le procédé comprenant, avant l'étape de transmission (E5), si un appui est effectué sur une commande de frein (21) par le conducteur, une étape de mise en oeuvre (E3) d'une limitation de la valeur de couple de référence (C0) à une valeur inférieure constituant la consigne (C1), le procédé comprenant de plus, si la commande de frein (21) est relâchée, une étape de diminution (E4) de ladite limitation, **caractérisé en ce que** l'étape de diminution (E4) de la limitation est mise en oeuvre par application d'une rampe de reprise en fonction du temps.

2. Procédé de gestion d'un groupe moto-propulseur (GMP) selon la revendication 1, **caractérisé en ce que** la diminution de la limitation est effectuée en fonction de la vitesse (v) du véhicule.

3. Procédé de gestion d'un groupe moto-propulseur (GMP) selon l'une des revendications 1 ou 2, **caractérisé en ce que** la valeur de couple de référence (C0) étant constante, la limitation est faite à une valeur constante de couple.

4. Procédé de gestion d'un groupe moto-propulseur (GMP) selon l'une des revendications 1 à 3, **caractérisé en ce que** les appuis étant des appuis au maximum sur les commandes d'accélérateur (20) et de frein (21), la limitation est effectuée entre 40 et 60% de la consigne de couple de référence (C0).

5. Procédé de gestion d'un groupe moto-propulseur (GMP) selon l'une des revendications 1 à 4, **caractérisé en ce que** l'étape de calcul (E2) de la consigne de couple est effectuée en fonction d'un mode de fonctionnement du groupe moto-propulseur choisi par le conducteur entre plusieurs modes prédéfinis, et d'une position de la commande d'accélérateur.

6. Dispositif (100) de gestion d'un groupe moto-propulseur (GMP) de véhicule automobile (1) en réponse à un appui sur une commande d'accélérateur (20) par un conducteur du véhicule à l'arrêt, le dispositif comprenant des moyens de calcul (E2) d'une valeur de couple de référence (C0) traduisant l'appui sur la commande d'accélérateur (20) et des moyens de transmission (E5) d'une consigne (C1) au groupe moto-propulseur (GMP) en fonction de ladite valeur de couple de référence (C0), le dispositif comprenant, des moyens de mise en oeuvre (E3) avant la transmission (E5), si un appui est effectué sur une commande de frein (21) par le conducteur, d'une limitation de la valeur de couple de référence (C0) à une valeur inférieure constituant la consigne (C1) et si la commande de frein (21) est relâchée, d'une diminution (E4) de ladite limitation, **caractérisé en ce que** la limitation est mise en oeuvre par application d'une rampe de reprise en fonction du temps.

7. Véhicule automobile comprenant un correcteur électronique de trajectoire (ESP) et un dispositif de gestion du groupe moto-propulseur selon la revendication 6, **caractérisé en ce que** ledit dispositif est configuré pour limiter le couple transmis aux roues lors d'un départ arrêté.

## Patentansprüche

1. Verfahren zum Steuern eines Antriebsstrangs (GMP) eines Kraftfahrzeugs (1) als Reaktion auf das Drücken einer Gaspedalsteuerung (20) durch einen Fahrer des stehenden Fahrzeugs, wobei das Verfahren einen Schritt des Berechnens (E2) eines Referenzdrehmomentwerts (CO) umfasst) Druck auf die Gaspedalsteuerung (20) widerspiegelt, und einen Schritt des Übertragens (E5) eines Sollwerts (C1) an den Antriebsstrang (GMP) als Funktion des Referenzdrehmomentwerts (CO), wobei das Verfahren Folgendes umfasst: vor dem Schritt des Übertragens (E5), wenn vom Fahrer ein Druck auf eine Bremssteuerung (21) ausgeübt wird, einen Schritt des Durchführens (E3) einer Begrenzung des Referenzdrehmomentwerts (CO) auf einen niedrigeren Wert, der den Sollwert (C1) bildet, das Verfahren ferner umfassend, wenn die Bremssteuerung (21) freigegeben wird, einen Schritt zur Verringerung (E4) der Begrenzung, **dadurch gekennzeichnet, dass** der Schritt des Verringerns (E4) der Begrenzung durch Anwenden einer Erholungsrampe als Funktion der Zeit implementiert wird.

2. Verfahren zur Steuerung eines Antriebsstrangs (GMP) nach Anspruch 1, **dadurch gekennzeichnet, dass** die Reduzierung der Begrenzung in Abhängigkeit von der Geschwindigkeit (v) des Fahrzeugs erfolgt.

3. Verfahren zur Steuerung eines Antriebsstrangs (GMP) nach einem der Ansprüche 1 oder 2, **dadurch gekennzeichnet, dass** bei konstantem Referenzdrehmomentwert (CO) die Begrenzung auf einen konstanten Drehmomentwert erfolgt.

4. Verfahren zur Steuerung eines Antriebsstrangs (GMP) nach einem der Ansprüche 1 bis 3, **dadurch gekennzeichnet, dass** es sich bei den Unterstützungen um maximale Unterstützungen an den Steuerungen des Gaspedals (20) und der Bremse (21) handelt, wobei die Begrenzung zwischen 40 und 60 % des Referenzwerts erfolgt Drehmomentsollwert (CO).

5. Verfahren zur Steuerung eines Antriebsstrangs (GMP) nach einem der Ansprüche 1 bis 4, **dadurch gekennzeichnet, dass** der Schritt des Berechnens (E2) des Drehmomentsollwerts in Abhängigkeit von einem Betriebsmodus des Antriebsstrangs durchgeführt wird, der vom Fahrer aus mehreren vordefinierten Modi gewählt wird. und einer Position der Gaspedalsteuerung.

6. Vorrichtung (100) zum Verwalten eines Antriebsstrangs (GMP) eines Kraftfahrzeugs (1) als Reaktion auf das Drücken einer Gaspedalsteuerung (20) durch einen Fahrer des stehenden Fahrzeugs, wobei die Vorrichtung Mittel (E2) zum Berechnen eines Referenzdrehmomentwerts umfasst ( CO), der den Druck auf die Gaspedalsteuerung (20) widerspiegelt, und Mittel (E5) zur Übertragung eines Sollwerts (C1) an den Antriebsstrang (GMP) als Funktion des Referenzdrehmomentwerts (CO), wobei die Vorrichtung Folgendes umfasst: Umsetzungsmittel (E3) vor der Übertragung (E5) bei Betätigung einer Bremssteuerung (21) durch den Fahrer eine Begrenzung des Referenzdrehmomentwertes (CO) auf einen niedrigeren Wert, der den Sollwert (C1) bildet, und wenn die Bremssteuerung ( 21) freigegeben wird, einer Verringerung (E4) der Begrenzung, **dadurch gekennzeichnet, dass** die Begrenzung durch Anwenden einer Erholungsrampe als Funktion der Zeit implementiert wird.

7. Kraftfahrzeug mit einem elektronischen Trajektorienkorrektor (ESP) und einer Vorrichtung zur Steuerung des Antriebsstrangs nach Anspruch 6, **dadurch gekennzeichnet, dass** die Vorrichtung so konfiguriert ist, dass sie das auf die Räder übertragene Drehmoment beim Anfahren aus dem Stand begrenzt.

## Claims

1. Method for managing a powertrain (GMP) of a motor vehicle (1) in response to pressing an accelerator control (20) by a driver of the stationary vehicle, the method comprising a step of calculating (E2) of a reference torque value (CO) reflecting pressure on the accelerator control (20) and a step of transmitting (E5) a setpoint (C1) to the powertrain (GMP) as a function of said reference torque value (CO), the method comprising, before the step of transmitting (E5), if a pressure is applied to a brake control (21) by the driver, a step of implementing (E3) a limitation of the reference torque value (CO) to a lower value constituting the setpoint (C1), the method further comprising, if the brake control (21) is released, a reduction step ( E4) of said limitation, **characterized in that** the step of decreasing (E4) the limitation is implemented by applying a recovery ramp as a function of time.

2. Method for managing a powertrain (GMP) according to Claim 1, **characterized in that** the reduction of the limitation is carried out as a function of the speed (v) of the vehicle.

3. Method for managing a powertrain (GMP) according to one of Claims 1 or 2, **characterized in that** the reference torque value (CO) being constant, the limitation is made to a constant torque value.

4. Method for managing a powertrain (GMP) according to one of Claims 1 to 3, **characterized in that** the supports being maximum supports on the accelerator (20) and brake (21) controls, the limitation is performed between 40 and 60% of the reference torque setpoint (CO).

5. Method for managing a powertrain (GMP) according to one of Claims 1 to 4, **characterized in that** the step of calculating (E2) the torque setpoint is carried out according to an operating mode the powertrain chosen by the driver between several predefined modes, and a position of the accelerator control.

6. Device (100) for managing a powertrain (GMP) of a motor vehicle (1) in response to pressing an accelerator control (20) by a driver of the stationary vehicle, the device comprising means (E2) for calculating a reference torque value (CO) reflecting pressure on the accelerator control (20) and means (E5) for transmitting a setpoint (C1) to the powertrain (GMP) as a function of said reference torque value (CO), the device comprising, implementation means (E3) before the transmission (E5), if a press is made on a brake control (21) by the driver, of a limitation of the reference torque value (CO) to a lower value constituting the setpoint (C1) and if the brake control (21) is released, of a decrease (E4) of said limitation, **characterized in that** the limitation is implemented by applying a recovery ramp as a function of time.

7. Motor vehicle comprising an electronic trajectory corrector (ESP) and a powertrain management device according to Claim 6, **characterized in that** the said device is configured to limit the torque transmitted to the wheels during a standing start.
